# EUROPÄISCHE PATENTSCHRIFT

(11) **EP 0 955 492 B1**
(45) Veröffentlichungstag und Bekanntmachung des Hinweises auf die Patenterteilung: **27.08.2003**
(21) Anmeldenummer: 99108121.7
(22) Anmeldetag: 24.04.1999
(51) Int. Cl.: F16K 27/02, B29C 45/00, B22D 25/02

(54) **Verfahren zur Herstellung eines Klappengehäuses und einer Klappenscheibe**
Process for manufacturing the housing and butterfly of a butterfly valve
Procédé de production du corps d'un robinet à papillon et le papillon

(30) Priorität: 08.05.1998 DE 19820614
(43) Veröffentlichungstag der Anmeldung: 10.11.1999
(73) Patentinhaber: Xomox International GmbH & Co., 88131 Lindau (DE)
(72) Erfinder: Gonsior, Wolfgang, 88131 Bodolz (DE)
(74) Vertreter: Schmitt, Meinrad, Dipl.-Ing.

(56) Entgegenhaltungen:
- DE-A- 3 937 281
- GB-A- 2 008 227
- JP-A- 60 044 667
- US-A- 4 038 734
- US-A- 5 794 591

## Beschreibung

Die Erfindung bezieht sich auf ein Verfahren zur Herstellung eines Klappengehäuses und einer Klappenscheibe gemäß den im Oberbegriff des Patentanspruchs 1 angegebenen Merkmalen. Ein derartiges Verfahren ist beispielsweise aus DE-A-39 37 281 bekannt.

Klappen, insbesondere Absperr- und Regelklappen, gelangen in Rohrleitungen zum Einsatz, sind beispielsweise auch aus der EP 0 471 270 B1 bekannt und enthalten ein Klappengehäuse und eine in diesem drehbar gelagerte Klappenscheibe. Klappengehäuse und Klappenscheiben werden üblicherweise als getrennte Teile gegossen, geschmiedet oder in einem anderen Urform-Verfahren, wie beispielsweise Ausbrennen aus gewalzten Platten oder dergleichen, hergestellt und bearbeitet. Speziell beim Gießen, dem zur Zeit überwiegend angewandten Verfahren, sind sowohl für das Klappengehäuse als auch für die Klappenscheibe jeweils separate unterschiedliche Modell- und Kerneinrichtungen erforderlich sowie Verfahrensschritte, wie Trennen von Anguß und Steiger, Verputzen usw., getrennt durchzuführen. Des weiteren sind besondere Maßnahmen bei den vorbekannten separat gefertigten Klappengehäusen mit vorgegossenem Durchgang beim Einbringen der Schaftbohrung zu beachten. Der Gesamtaufwand für die separate Fertigung von Klappengehäuse einerseits und Klappenscheibe andererseits ist nicht unerheblich. Bei der Herstellung der Schaftbohrung in das Klappengehäuse mit freiem Durchgang, in welchem später die Klappenscheibe angeordnet wird, sind besondere Maßnahmen erforderlich, um ein Durchbrechen des Bohrers in den freien Durchgang zu vermeiden. Des weiteren bereitet das exakte koaxiale Anbohren der auf der anderen Seite des freien Durchgangs vorzusehenden Sackbohrung für den Schaft erhebliche Schwierigkeiten, da eine Führung des Bohrers im freien Durchgang nicht möglich ist.

Ferner ist aus dem US Patent 3 039 482 eine Klappe bekannt, welche eine mit der Klappenscheibe verbundene Dichtscheibe enthält. Diese Dichtscheibe weist einen wesentlich größeren Außendurchmesser als die Klappenscheibe auf und ist mit ihrem äußeren Rand fest mit dem Klappengehäuse verbunden. Nach der Fertigung und Montage ist mittels der Dichtscheibe eine hermetische Abdichtung unabhängig von der Dichtung der Klappenscheibe selbst erreicht. Die Dichtscheibe enthält eine ringförmige Sollbruchstelle, welche im wesentlichen den gleichen Außendurchmesser wie die Klappenscheibe aufweist. Nach dem Einbau der Klappe in eine Rohrleitung oder dergleichen wird beim erstmaligen Aufdrehen der Klappenscheibe die Dichtscheibe an der Sollbruchstelle getrennt, so daß nunmehr mittels der Klappenscheibe in herkömmlicher Weise der Strömungsweg abgesperrt werden kann. Die Klappenscheibe selbst ist in bekannter Weise unabhängig vom Klappengehäuse gefertigt.

Hiervon ausgehend liegt der Erfindung die Aufgabe zugrunde, ein Verfahren vorzuschlagen, welches eine vereinfachte Herstellung von Klappengehäuse und Klappenscheibe ermöglicht. Das Verfahren soll eine erheblich vereinfachte und genauere Fertigung der Schaftbohrung ermöglichen.

Die Lösung dieser Aufgabe erfolgt gemäß den Merkmalen des Patentanspruchs 1.

Gemäß dem erfindungsgemäßen Verfahren werden das Klappengehäuse und die Klappenscheibe gemeinsam aus einem Stück hergestellt. Hierbei wird das Klappengehäuse mit vollem Durchgangsbereich, aus welchem später die Klappenscheibe gebildet wird, mit fertiger Außenkontur nach einem bekannten Urform-Verfahren wie Gießen, Schmieden, Ausbrennen aus einer gewalzten Platte oder dergleichen mit der Klappenscheibe gemeinsam hergestellt. So sind beim Gießen nur eine einzige Modellund Kerneinrichtung sowie die insoweit erforderlichen Verfahrensschritte wie Trennen von Anguß und Steige, Verputzen und dergleichen, erforderlich. Hierbei ist ausreichend Platz für den Anguß usw. vorhanden, und es ist nur ein einziges Modell für Klappengehäuse und Klappenscheibe erforderlich. Des weiteren ist gewährleistet, daß für Klappengehäuse und Klappenscheibe immer das gleiche Material zum Einsatz gelangt. In dem nachfolgend auszubildenden Durchgangsbereich ist zumindest ein Durchgang oder Kern vorhanden, aus welchem nach weiterer Bearbeitung die Klappenscheibe gefertigt wird.

Es ist von besonderer Bedeutung, daß die Schaftbohrung in die gemeinsame Einheit von Klappengehäuse und Klappenscheibe, also vor deren Heraustrennen, eingebracht wird. Dies erfolgt in einer einzigen Aufspannung und eine genauere, einfachere und schnellere Herstellung der Schaftbohrung gemeinsam für Klappengehäuse und Klappenscheibe wird erreicht als bei der herkömmlichen separaten Herstellung der Schaftbohrung einerseits in das Klappengehäuse und andererseits in die Klappenscheibe. In einem weiteren erfindungswesentlichen Schritt erfolgt nach der Herstellung bzw. Bearbeitung der gemeinsamen Schaftbohrung die Trennung der Klappenscheibe aus dem Klappengehäuse, bevorzugt durch Laserschneiden, mittels Wasserstrahl oder dergleichen. In zweckmäßiger Weise ist das massive Durchgangsteil mit rückwärtiger oder beidseitiger Kontur der Scheibe bereits beim Urformen vorgefertigt, so daß nach dem Heraustrennen zur Fertigbearbeitung der Klappenscheibe nur noch ein Drehen und Verbohren derselben erforderlich ist. Die Fertigbearbeitung des Klappengehäuses erfolgt ebenso wie die Montage der fertigen Klappenscheibe sowie eines Sitzringes in herkömmlicher Weise.

Weiterbildungen und besondere Ausgestaltungen der Erfindung sind in den Unteransprüchen sowie der weiteren Beschreibung angegeben.

Das erfindungsgemäße Verfahren wird nachfolgend anhand eines in der Zeichnung dargestellten Ausführungsbeispiels näher erläutert. Es zeigen:
- Fig. 1: die gemeinsame Herstellung von Klappengehäuse und Klappenscheibe in einem Urform-Verfahren,
- Fig. 2: das Bearbeiten der Schaftbohrung gemeinsam von Klappengehäuse und Klappenscheibe,
- Fig. 3: das Trennen von Klappengehäuse und Klappenscheibe,
- Fig. 4: die Fertigbearbeitung der Klappenscheibe,
- Fig. 5: die Fertigbearbeitung des Klappengehäuses.

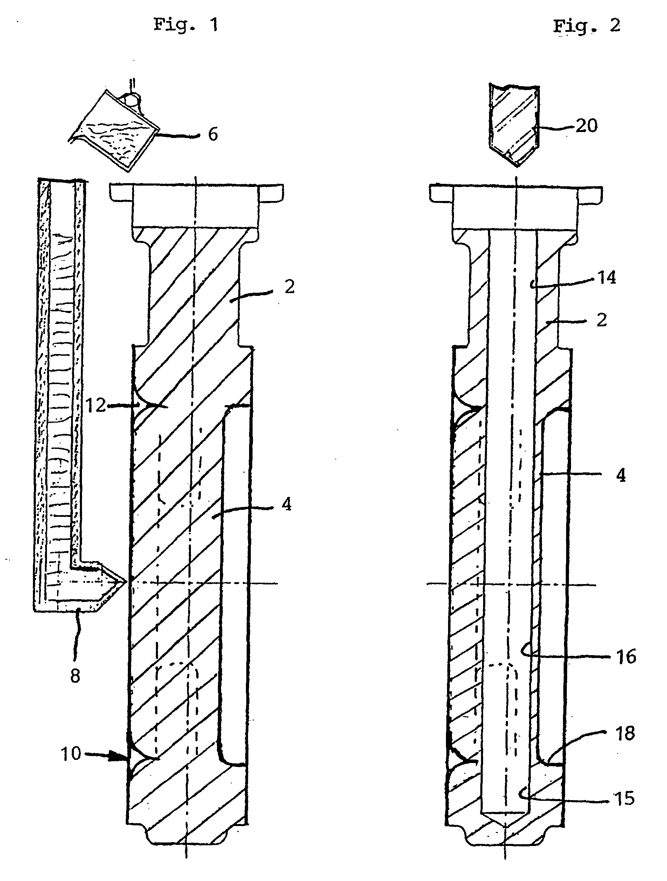

In Fig. 1 ist der erste Verfahrensschritt der gemeinsamen Herstellung des Klappengehäuses 2 und Durchgangsteils bzw. der Klappenscheibe 4 durch Gießen dargestellt. Hierzu wird das flüssige Metall aus einer Kokille 6 über einen Ausleger 8 in eine gemeinsame hier nicht weiter dargestellte Gießform eingebracht. Hierbei wird das Gehäuse 2-mit fertiger Außenkontur hergestellt. Des weiteren wird dem massiven Durchgangsteil 4, welches einteilig mit dem Klappengehäuse 2 ist, mit rückwärtiger oder beidseitiger Kontur für die Klappenscheibe vorgefertigt. Im Trennbereich 10 ist in zweckmäßiger Weise eine ringförmige Einbuchtung 12 vorgesehen, welche der sphärischen Außenkontur der Klappenscheibe und/oder der sphärischen Kontur des Durchgangs des Klappengehäuses zumindest näherungsweise entspricht. Alternativ ist im Rahmen der Erfindung das Urformen anstelle durch Gießen in einem anderen Urform-Verfahren, wie Schmieden oder Ausbrennen aus einer gewalzten Platte durchführbar, wobei jedoch bei einer gewalzten Platte keine Scheibenkonturen vorgegeben werden.

Fig. 2 zeigt den weiteren Verfahrensschritt der Bearbeitung bzw. des Einbringens der einheitlichen Schaftbohrung 14-16 des Klappengehäuses 2 und des massiven Durchgangsteils 4. Hierzu ist eine einzige Einspannung erforderlich. Da im Gegensatz zu herkömmlichen Verfahren der spätere Durchgang 18 des Klappengehäuses 2 von dem massiven Durchgangsteil 4 vollständig ausgefüllt ist, wird in einfacher Weise und mit geringem Zeitaufwand eine genaue Herstellung der Schaftbohrung ermöglicht. Das bei separater Herstellung der Schaftbohrung problematische Durchbrechen des Bohrers 20 beim Austritt aus der Durchgangsbohrung 14 in einen freien Durchgang 18 wird vermieden und die gemäß Zeichnung untere Sackbohrung 15 ist mit hoher Präzision koaxial zur oberen Durchgangsbohrung 14 des Klappengehäuses 2.

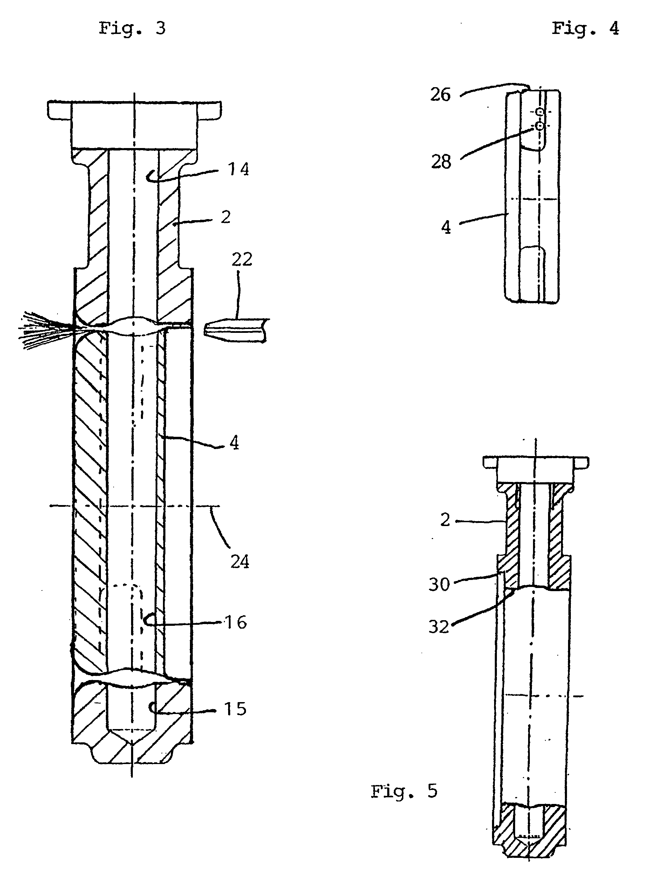

Fig. 3 zeigt das Trennen des Durchgangsteils bzw. der Klappenscheibe 4 aus dem Klappengehäuse 2. Hierzu wird mittels einer hier nur schematisch angedeuteten Trenneinrichtung 22, insbesondere durch Laserschneiden oder mittels Wasserstrahl oder dergleichen, über den vollen Umfang bezüglich der Längsachse 24 das Durchgangsteil 4 herausgetrennt.

Fig. 4 zeigt die aus dem Durchgangsteil 4 durch Abdrehen des Außenumfangs 26 und Einbringen von Bohrungen 28 und dergleichen hergestellte Klappenscheibe.

Fig. 5 zeigt das fertig bearbeitete Gehäuse 2, welches auf einer Seite eine ringförmige Ausnehmung 30 für einen hier nicht weiter dargestellten Sitzring bzw. Sitzhaltering aufweist. Ferner ist die Innenfläche 32 des Durchgangs 18, insbesondere durch Drehen auf das erforderliche Endmaß fertig bearbeitet. In das Gehäuse wird nachfolgend die fertig bearbeitete Klappenscheibe in bekannter Weise montiert.

### Bezugszeichen

- 2: Klappengehäuse
- 4: Durchgangsteil / Klappenscheibe
- 6: Kokille
- 8: Ausleger
- 10: Trennbereich
- 12: Einbuchtung
- 14-16: Schaftbohrung
- 18: Durchgang
- 20: Bohrer
- 22: Trenneinrichtung
- 24: Längsachse
- 26: Außenumfang von 4
- 28: Bohrung
- 30: Ausnehmung
- 32: Innenfläche von 18

## Patentansprüche

1. Verfahren zur Herstellung eines Klappengehäuses und einer Klappenscheibe, wobei die Klappenscheibe mittels eines durch eine Schaftbohrung geführten Schaftes im Klappengehäuse schwenkbar gelagert ist, und wobei
das Klappengehäuse (2) und die Klappenscheibe (4) gemeinsam in einem Stück hergestellt werden, **dadurch gekennzeichnet, daß** nachfolgend die Schaftbohrung (14-16) in das Klappengehäuse (2) sowie die mit diesem noch verbundene Klappenscheibe (4) eingebracht wird und daß schließlich die Klappenscheibe (4) aus dem Gehäuse (2) herausgetrennt wird.

2. Verfahren nach Anspruch 1, **dadurch gekennzeichnet, daß** im ersten Verfahrensschritt die Außenkontur des Klappengehäuses (2) vorgegeben wird.

3. Verfahren nach Anspruch 1 oder 2, **dadurch gekennzeichnet, daß** im ersten Verfahrensschritt keine Kontur der Klappenscheibe (4) oder die Kontur wenigstens einer Seite der Klappenscheibe (4) vorgegeben wird.

4. Verfahren nach einem der Ansprüche 1 oder 3, **dadurch gekennzeichnet, daß** im ersten Verfahrensschritt für den Trennbereich (10) vom Klappengehäuse (2) und der Klappenscheibe (4) eine Einbuchtung (12) und/oder die Kontur im Bereich der Innenfläche des Klappengehäuses (2) und/oder die Kontur der Außenfläche der Klappenscheibe (4) zumindest näherungsweise vorgegeben wird.

5. Verfahren nach einem der Ansprüche 1 bis 4, **dadurch gekennzeichnet, daß** beim Herstellen der Schaftbohrung zunächst eine Durchgangsbohrung (14) des Gehäuses (2), nachfolgend im massiven Durchgangsteil (4) bzw. der Klappenscheibe eine Durchgangsbohrung (16) und schließlich die koaxiale Sackbohrung (15) des Klappengehäuses (2) hergestellt wird.

6. Verfahren nach einem der Ansprüche 1 bis 5, **dadurch gekennzeichnet, daß** mittels einer Trenneinrichtung (22), vorzugsweise durch Laserschneiden oder mittels eines Wasserstrahles, über den vollen Umfang, bezogen auf die Längsachse (24), die Klappenscheibe (4) aus dem Klappengehäuse (2) herausgetrennt wird und/oder daß die Trenneinrichtung (22) und das Klappengehäuse (2) samt Klappenscheibe (4) eine gegenseitige Relativbewegung bezüglich der und/oder um die Längsachse (24) durchführen.

## Claims

1. Method for producing a flap housing and a flap disc, the flap disc being pivotally mounted in the flap housing by means of a shaft guided through a shaft bore, and the flap housing (2) and the flap disc (4) being produced together in one piece, **characterised in that** the shaft bore (14 - 16) is subsequently introduced into the flap housing (2) and the flap disc (4) still connected thereto and **in that** finally the flap disc (4) is separated from the housing (2).

2. Method according to claim 1, **characterised in that** the outer contour of the flap housing (2) is predetermined in the first method step.

3. Method according to claim 1 or 2, **characterised in that** no contour of the flap disc (4), or the contour of at least one side of the flap disc (4) is predetermined in the first method step.

4. Method according to either of claims 1 or 3, **characterised in that** a notch (12) and/or the contour in the region of the inner face of the flap housing (2) and/or the contour of the outer face of the flap disc (4) are at least approximately predetermined for the separation region (10) of the flap housing (2) and flap disc (4) in a first method step.

5. Method according to any one of claims 1 to 4, **characterised in that** during production of the shaft bore, a through-bore (14) in the housing (2) is initially produced and subsequently a through-bore (16) is produced in the solid passage part (4) or the flap disc and finally, the coaxial blind bore (15) of the flap housing (2) is produced.

6. Method according to any one of claims 1 to 5, **characterised in that** the flap disc (4) is separated from the flap housing (2) by means of a separating device (22), preferably by laser cutting or by means of a water jet, over the entire periphery, with respect to the longitudinal axis 24 and/or **in that** the separating device (22) and the flap housing (2) together with the flap disc (4) carry out a movement relative to one another with respect to and/or about the longitudinal axis (24).

## Revendications

1. Procédé de fabrication d'un corps de robinet et d'un disque de robinet, le disque de robinet étant monté pivotant dans le corps de robinet au moyen d'un arbre guidé dans un perçage d'arbre, et le corps (2) de robinet et le disque (4) de robinet étant fabriqués d'un seul tenant, ***caractérisé en ce que*** le perçage d'arbre (14-16) est ensuite réalisé dans le corps (2) de robinet et dans le disque (4) de robinet encore relié à celui-ci, et ***en ce que*** le disque (4) de robinet est finalement séparé du corps (2) de robinet.

2. Procédé selon la revendication 1, ***caractérisé en ce que,*** dans la première étape du procédé, le contour extérieur du corps (2) de robinet est prédéterminé.

3. Procédé selon la revendication 1 ou 2, ***caractérisé en ce que,*** dans la première étape du procédé, aucun contour du disque (4) de robinet ou le contour d'au moins un côté du disque (4) de robinet est prédéterminé.

4. Procédé selon l'une quelconque des revendications 1 ou *3,* ***caractérisé en ce que,*** dans la première étape du procédé, une entaille (12) est définie pour la zone de séparation (10) du corps (2) de robinet et du disque (4) de robinet et/ou le contour est défini au niveau de la surface intérieure du corps (2) de robinet et/ou le contour de la surface extérieure du disque (4) de robinet est défini au moins approximativement.

5. Procédé selon l'une quelconque des revendications 1 à 4, ***caractérisé en ce que,*** lors de la fabrication du perçage d'arbre, un perçage de passage (14) du corps (2) est d'abord fabriqué, puis un perçage de passage (16) dans la partie de passage massive (4) ou le disque de robinet, et enfin le perçage borgne coaxial (15) du corps (2) de robinet.

6. Procédé selon l'une quelconque des revendications 1 à 5, ***caractérisé en ce qu'au*** moyen d'un dispositif de séparation (22), de préférence par découpage laser ou au moyen d'un jet d'eau, le disque (4) de robinet est séparé du corps (2) de robinet sur toute la circonférence par rapport à l'axe longitudinal (24), et/ou ***en ce que*** le dispositif de séparation (22) et le corps (2) de robinet avec le disque (4) de robinet exécutent un mouvement relatif opposé par rapport à l'axe longitudinal (24) ou autour de celui-ci.
